# EUROPÄISCHE PATENTANMELDUNG

(11) **EP 0 854 318 A1**
(43) Veröffentlichungstag der Anmeldung: **22.07.1998**
(21) Anmeldenummer: 98100466.6
(22) Anmeldetag: 13.01.1998
(51) Int. Cl.: F21V 8/00, G02F 1/1335, G02F 1/13

(54) **Flachbildschirm**

(30) Priorität: 15.01.1997 DE 29700485 U
(71) Anmelder: SIEMENS AKTIENGESELLSCHAFT, 80333 München (DE)
(72) Erfinder: März, Michael, 67808 Steinbach (DE); Wammes, Klaus, 67577 Alsheim (DE)

(57) **Zusammenfassung**

Flachbildschirm mit einer LCD-Matrix (1), die jeweils unter Einhaltung eines Luftspaltes (6, 11) zwischen einer Glasplatte (5) und einer flachen Beleuchtungseinrichtung (9) angeordnet ist, wobei die Dicke der Glasplatte (5) ein Mehrfaches der Luftspaltbreite beträgt und wobei die Beleuchtungseinrichtung (9) eine der LCD-Matrix (1) unmittelbar gegenüberliegende Lichtabgabefläche aufweist, die für eine homogene Lichtabgabe ausgebildet ist.

## Beschreibung

Flachbildschirme mit einer LCD-Matrix werden wegen ihrer flachen und somit platzsparenden Bauweise und wegen ihres geringen Energieverbrauchs in zunehmendem Maße als Ersatz für Bildschirmröhren eingesetzt. Um eine hohe Helligkeit der Bildschirmanzeige zu erreichen und dadurch ein Arbeiten mit dem Flachbildschirm bei Tageslicht zu ermöglichen, ist es aus der DE 295 14 630 U1 bekannt, hinter der LCD-Matrix und unter Zwischenlage einer flachen Lichtverteileinrichtung eine Leuchtstoffröhre anzuordnen. Die Lichtverteileinrichtung besteht dabei aus einem Diffusor und einer an der LCD-Matrix anliegenden Linsenfolie, wodurch eine gleichmäßige Lichtverteilung des von der Leuchtstoffröhre durch die LCD-Matrix gestrahlten Lichts erfolgt.

Der Erfindung liegt die Aufgabe zugrunde, die Bildschirmanzeige bei möglichst großer Helligkeit weiter zu verbessern.

Gemäß der Erfindung wird die Aufgabe durch den in Anspruch 1 angegebenen Flachbildschirm gelöst.

Vorteilhafte Weiterbildungen des erfindungsgemäßen Flachbildschirms sind den Unteransprüchen zu entnehmen.

Durch die der LCD-Matrix vorgeordnete Glasplatte wird in vorteilhafter Weise der Blickwinkel, innerhalb dessen eine Betrachtung der Bildschirmanzeige möglich ist, vergrößert. Zugleich bildet die Glasplatte einen mechanischen Schutz für die LCD-Matrix. Zwischen der Glasplatte und der LCD-Matrix ist ein Luftspalt ausgebildet, wodurch das Auftreten störender Newton-Ringe verhindert wird. Zur Entspiegelung ist die Glasplatte vorzugsweise beidseitig metallbeschichtet. Auf der von der Glasplatte abgewandten Seite der LCD-Matrix ist eine flache Beleuchtungseinrichtung angeordnet, die eine der LCD-Matrix ebenfalls unter Einhaltung eines Luftspalts unmittelbar gegenüberliegende Lichtabgabefläche zur homogenen Lichtabgabe aufweist. Insgesamt wird durch diese Anordnung eine Bildschirmanzeige mit hoher Helligkeit, großem Blickwinkel und ohne störende Newton-Ringe und Geisterbilder erzielt.

Ein besonders flacher Aufbau des erfindungsgemäßen Flachbildschirms wird in vorteilhafter Weise dadurch erreicht, daß die Beleuchtungseinrichtung stabförmige Lichtquellen aufweist, die parallel an zwei einander gegenüberliegenden Schmalseiten eines plattenförmigen Diffusors angeordnet sind, und daß der Diffusor zur Bildung der Lichtabgabefläche auf einer seiner Hauptseiten eine Abstrahlfolie trägt. Die Abstrahlfolie besteht dabei vorzugsweise aus einer Linsen- oder Prismenfolie. Um die gewünschte gleichmäßige Lichtverteilung auch bei einem Ausfall einzelner Lichtquellen aufrechtzuerhalten, sind an den beiden Schmalseiten des Diffusors jeweils mindestens zwei zueinander parallele Lichtquellen angeordnet.

Ein kompakter und stabiler Aufbau des erfindungsgemäßen Flachbildschirms wird in vorteilhafter Weise dadurch erreicht, daß die LCD-Matrix in einem Rahmen angeordnet ist, der beiderseits der LCD-Matrix Ausnehmungen zur Aufnahme der Glasplatte bzw. der Beleuchtungseinrichtung aufweist, wobei der Rahmen im Bereich der Ausnehmungen Auflageflächen aufweist, an denen die Glasplatte und die Beleuchtungseinrichtung unter Einhaltung der vorgegebenen Luftspalte gegenüber der LCD-Matrix anliegen.

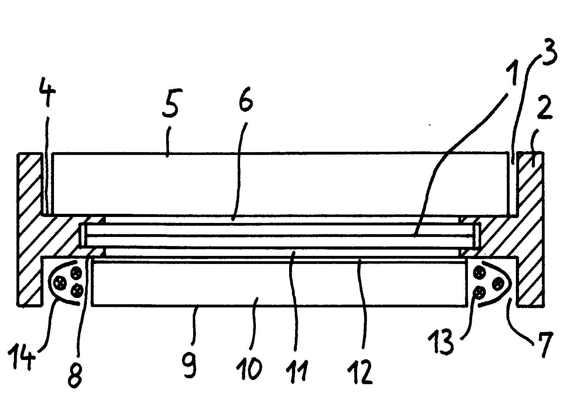

Zur weiteren Erläuterung der Erfindung wird im folgenden auf die Figur der Zeichnung Bezug genommen, die ein Ausführungsbeispiel des erfindungsgemäßen Flachbildschirms im Querschnitt zeigt.

Die Figur zeigt im Querschnitt eine sich senkrecht zur Zeichenebene erstreckende LCD-Matrix 1, die umfangsseitig in einem Rahmen 2 gehalten ist. Der Rahmen 2 weist auf einer Seite der LCD-Matrix 1 eine Ausnehmung 3 mit einer Auflagefläche 4 für eine Glasplatte 5 auf, die unter Einhaltung eines Luftspalts 6 parallel zu der LCD-Matrix 1 liegt. Die Dicke der beidseitig metallbeschichteten Glasplatte 5 beträgt etwa 6 mm, die Luftspaltbreite etwa 0,7 mm.

Auf der gegenüberliegenden Seite der LCD-Matrix 1 enthält der Rahmen 2 eine weitere Ausnehmung 7 mit einer Auflagefläche 8 für eine flache Beleuchtungseinrichtung 9. Diese besteht aus einem plattenförmigen Diffusor 10, der auf seiner der LCD-Matrix 1 unter Einhaltung eines Luftspaltes 11 gegenüberliegenden Seite eine Abstrahlfolie 12 in Form einer Linsen- oder Prismenfolie trägt. An zwei einander gegenüberliegenden Schmalseiten des Diffusors 10 sind jeweils drei dazu parallele Kaltlichtquellen 13 mit jeweils einem gemeinsamen Reflektor 14 angeordnet. Das von den Kaltlichtquellen 13 seitlich in den Diffusor 10 eingestrahlte Licht wird dort verteilt und gleichmäßig über die Abstrahlfolie 12 in Richtung der LCD-Matrix 1 abgestrahlt. Dadurch, daß auf jeder der beiden Schmalseiten des Diffusors 10 jeweils mehrere Lichtquellen 13 vorgesehen sind, wird die gleichmäßige Lichtverteilung auch bei einem Ausfall einzelner Lichtquellen 13 aufrechterhalten.

Der gezeigte Flachbildschirm zeichnet sich durch eine hohe Helligkeit und einen durch die Glasplatte 5 gegenüber herkömmlichen Flachbildschirmen vergrößerten Blickwinkel aus, wobei die Bildschirmanzeige aufgrund des gezeigten Aufbaus des Flachbildschirms ohne störende Newton-Ringe und Geisterbilder ist.

## Patentansprüche

1. Flachbildschirm mit einer LCD-Matrix (1), die jeweils unter Einhaltung eines Luftspaltes (6, 11) zwischen einer Glasplatte (5) und einer flachen Beleuchtungseinrichtung (9) angeordnet ist, wobei die Dicke der Glasplatte (5) ein Mehrfaches der Luftspaltbreite beträgt und wobei die Beleuchtungseinrichtung (9) eine der LCD-Matrix (1) unmittelbar gegenüberliegende Lichtabgabefläche aufweist, die für eine homogene Lichtabgabe ausgebildet ist.

2. Flachbildschirm nach Anspruch 1, **dadurch gekennzeichnet,** daß die Glasplatte (5) beidseitig metallbeschichtet ist.

3. Flachbildschirm nach Anspruch 1 oder 2, **dadurch gekennzeichnet,** daß die Dicke der Glasplatte (5) das 5- bis 10fache der Luftspaltbreite beträgt.

4. Flachbildschirm nach einem der vorangehenden Ansprüche, **dadurch gekennzeichnet,** daß die Beleuchtungseinrichtung (9) stabförmige Lichtquellen (13) aufweist, die parallel an zwei einander gegenüberliegenden Schmalseiten eines plattenförmigen Diffusors (10) angeordnet sind, und daß der Diffusor (10) zur Bildung der Lichtabgabefläche auf einer seiner Hauptseiten eine Abstrahlfolie (12) trägt.

5. Flachbildschirm nach Anspruch 4, **dadurch gekennzeichnet,** daß die Abstrahlfolie (12) aus einer Linsen- oder Prismenfolie besteht.

6. Flachbildschirm nach Anspruch 4 oder 5, **dadurch gekennzeichnet,** daß an den beiden Schmalseiten des Diffusors (10) jeweils mindestens zwei zueinander parallele Lichtquellen (13) angeordnet sind.

7. Flachbildschirm nach einem der vorangehenden Ansprüche, **dadurch gekennzeichnet,** daß die LCD-Matrix (2) in einem Rahmen angeordnet ist, der beiderseits der LCD-Matrix (1) Ausnehmungen (3, 7) zur Aufnahme der Glasplatte (5) bzw. der Beleuchtungseinrichtung (9) aufweist, wobei der Rahmen (2) im Bereich der Ausnehmungen (3, 7) Auflageflächen (4, 8) aufweist, an denen die Glasplatte (5) und die Beleuchtungseinrichtung (9) unter Einhaltung der vorgegebenen Luftspalte (6, 11) gegenüber der LCD-Matrix (1) anliegen.
